# EUROPEAN PATENT APPLICATION

(11) **EP 1 414 200 A1**
(43) Date of publication of application: **28.04.2004**
(21) Application number: 03024478.4
(22) Date of filing: 23.10.2003
(51) Int. Cl.: H04L 12/56, H04Q 7/22

(54) **Mobile communication system, mobile station, base station, and packet communication method**

(30) Priority: 24.10.2002 JP 2002309369
(71) Applicant: NEC CORPORATION, Tokyo (JP)
(72) Inventor: Takano, Nahoko, Minato-ku, Tokyo (JP); Hamabe, Kojiro, Minato-ku, Tokyo (JP); Tsumura, Soichi, Minato-ku, Tokyo (JP); Matsumoto, Mariko, Minato-ku, Tokyo (JP)
(74) Representative: VOSSIUS & PARTNER

(57) **Abstract**

A mobile communication system includes a base station and a mobile station. The base station includes a base station transmitting/receiving section, base station state updating section, and base station information storage section. The base station transmitting/receiving section sets a radio channel to the mobile station. The base station state updating section generates transmission/reception state update information and notifies the mobile station of it. The base station information storage section continuously holds dedicated physical channel setting information in the radio channel in a suspend state. The mobile station includes a mobile station transmitting/receiving section, mobile station state updating section, and mobile station information storage section. The mobile station transmitting/receiving section sets the radio channel to the base station. The mobile station state updating section sets, on the basis of the state update information, an active state in which the packet can be received or the suspend state in which the packet cannot be received. The mobile station information storage section continuously holds the dedicated physical channel setting information in the radio channel in the suspend state. A mobile station, a base station, and a packet communication method are also disclosed.

## Description

The present invention relates to a mobile communication system, a mobile station, a base station, and a packet communication method used therefor and, more particularly, to a packet communication method such as an HSDPA (High-Speed Downlink Packet Access) service in a mobile communication system.

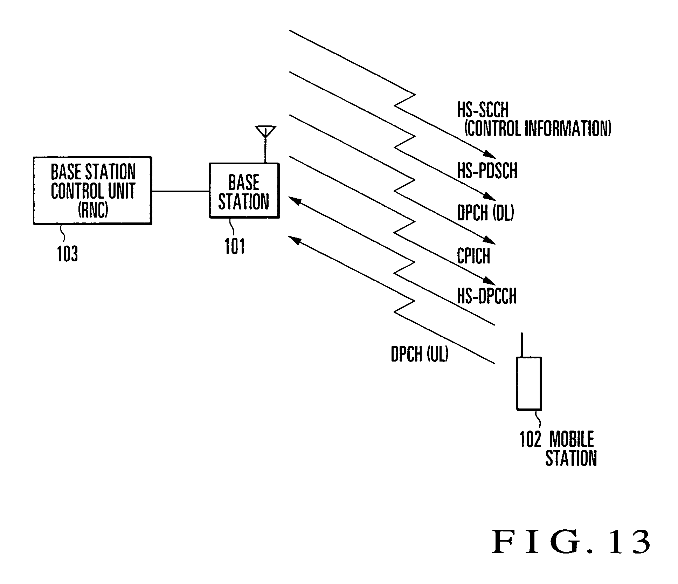

Conventionally, in an HSDPA service, DPCHs (Dedicated Physical CHannels) [DL (downlink)/UL (uplink)] are set between a mobile station 102 and a base station 101, as shown in Fig. 13. Referring to Fig. 13, a base station control unit [e.g., an RNC (Radio Network Controller)] 103 is connected to the base station 101.

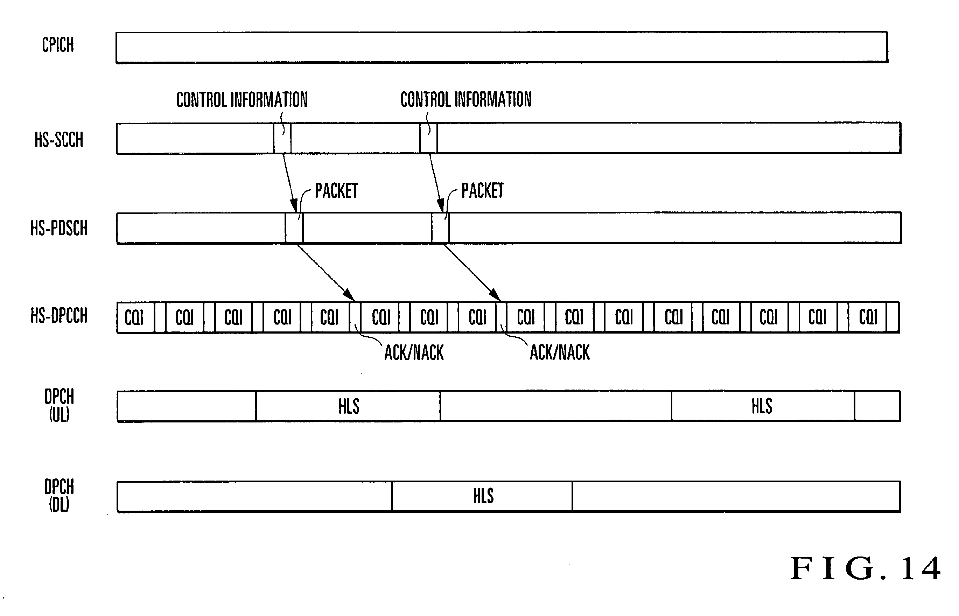

As shown in Fig. 14, the mobile station 102 always receives a 4-CH (channel) HS-SCCH (High Speed Shared Control CHannel) designated from the base station 101. The mobile station 102 detects information of the mobile station ID (identifier) contained in the HS-SCCH and determines whether the ID coincides with the mobile station ID of the mobile station 102.

Upon detecting the mobile station ID of the mobile station 102 by the HS-SCCH, the mobile station 102 receives an HS-PDSCH (High Speed Physical Downlink Shared CHannel) transmitted with a predetermined time delay from the HS-SCCH by using control information transmitted by the HS-SCCH.

When user data or data such as upper layer control information (to be referred to as dedicated physical channel data hereinafter) to be transmitted by a dedicated physical channel is generated, the mobile station 102 and base station 101 immediately transmit the data using DPCH (UL/DL) (e.g., 3GPP TR (Technical Report) 25.858, V5.0.0, March 2002).

The above-described HSDPA is a method using high-speed packet transmission in a downlink channel. In an HSDPA service receivable state, a CPICH (Common PIlot CHannel), HS-PDSCH, HS-SCCH, and DPCH (DL) are transmitted by a downlink channel. Additionally, an HS-DPCCH (High Speed Dedicated Physical Control Channel) and DPCH (UL) are transmitted by an uplink channel.

The CPICH is a pilot signal transmitted to all mobile stations in the cell managed by the base station 101. The CPICH is transmitted from the base station 101 at a predetermined power. The CPICH is used to search for a path, estimate a transmission path, and measure the DL reception quality. The HS-PDSCH is a shared channel that transmits packets of user data. The HS-PDSCH is time-multiplexed and used between a plurality of mobile stations.

The HS-SCCH is a shared channel used to transmit control data necessary for receiving a packet transmitted by the HS-PDSCH. The HS-SCCH is time-multiplexed and used between a plurality of mobile stations. Each mobile station always receives one or a plurality of HS-SCCHs. If an HS-SCCH received by a mobile station is addressed to that mobile station, the mobile station receives an HS-PDSCH packet by using the control information in the HS-SCCH.

The DPCH (DL/UL) is constituted by a DPCCH (Dedicated Physical Control CHannel) and DPDCH (Dedicated Physical Data CHannel).

The DPCCH transmits physical layer control information such as a TPC (Transmit Power Control) bit as the transmission power control information of a paired channel or TFCI (Transport Format Combination Indication) that indicates the structure of DPDCH. The DPDCH transmits user data or dedicated physical channel data as an upper layer signal.

An HS-DPCCH is a dedicated physical channel that transmits a CQI (Channel Quality Indication) decided from the quality measurement result of the CPICH and ACK/NACK (ACKnowledgement/Negative ACKnowledgements) as notification confirmation information of a received packet.

As a conventional HSDPA service, an HSDPA transmitting/receiving method including paging operation will be described next. A mobile station receives a ringing signal transmitted at a predetermined period. The called mobile station transmits/receives a control signal to set a radio channel and sets a DPCH (UL/DL).

The mobile station receives a 4-CH HS-SCCH designated from the base station, detects the information of the mobile station ID contained in the HS-SCCH, and determines whether the detected mobile station ID information coincides with the mobile station ID of the mobile station that has received the HS-SCCH. If the mobile station ID of the mobile station is detected by the HS-SCCH, the mobile station receives an HS-PDSCH transmitted with a predetermined time delay from the HS-SCCH.

When packet transmission/reception is ended, and a predetermined time has elapsed, transmission/reception of the HS-SCCH and DPCH (UL/DL) is stopped. The physical channel resource is released.

Normally, state transition in the mobile station is power ON → ringing by paging → FACH (Forward Access CHannel). The transition is repeated between the FACH state and the HSDPA state. In a standby mode for a packet, if no packet transmission is present, the mobile station is set in the FACH state during a predetermined time.

In the FACH state, the mobile station monitors the control signal of the downlink channel (DL) at a predetermined timing while holding no dedicated physical channel resource. That is, the FACH state is set when all dedicated physical channels are released (e.g., "W-CDMA Mobile Communication Method, 3-3 Radio Access Interface Standards, 3-3-5 RRC (Radio Resource Control)" edited by Keiji Tachikawa, Maruzen KK, June 25, 2001, pp. 160-170).

In the HSDPA service, if paging is executed after the packet to be transmitted to the mobile station arrives at the base station, it takes time to change the idle state to a packet receivable state [DCH (Dedicated CHannel) state]. For this reason, the delay time becomes long, and the user throughput decreases.

Even when the FACH state is to be changed to the DCH state, all dedicated physical channels must be set. Hence, the delay time becomes long, and the user throughput decreases.

It is an object of the present invention to provide a mobile communication system, a mobile station, a base station, and a packet communication method used therefor, which can effectively reduce delay of packet transmission.

In order to achieve the above object, according to the present invention, there is provided a mobile communication system comprising a base station and a mobile station, a radio channel being set between the base station and the mobile station, and a packet being transmitted from the base station to the mobile station by using the radio channel, wherein the base station comprises a base station transmitting/receiving section which sets the radio channel to the mobile station, a base station state updating section which generates transmission/reception state update information that indicates update of a packet receivable state in the mobile station and notifies the mobile station of the transmission/reception state update information, and a base station information storage section which continuously holds dedicated physical channel setting information in the radio channel in a suspend state, and the mobile station comprises a mobile station transmitting/receiving section which sets the radio channel to the base station, a mobile station state updating section which sets, on the basis of the transmission/reception state update information, one of an active state in which the packet can be received and the suspend state in which the packet cannot be received, and a mobile station information storage section which continuously holds the dedicated physical channel setting information in the radio channel in the suspend state.

The present invention will be further described with reference to the accompanying drawings.
Fig. 1 is a block diagram showing the configuration of a mobile communication system according to an embodiment of the present invention;
Fig. 2 is a block diagram showing the arrangement of a base station according to the first embodiment of the present invention;
Fig. 3 is a block diagram showing the arrangement of a mobile station according to the first embodiment of the present invention;
Fig. 4 is a view showing the flow of signals transmitted/received between the base station shown in Fig. 2 and the mobile station shown in Fig. 3;
Fig. 5 is a sequence chart showing the operation of the mobile communication system according to the first embodiment of the present invention;
Fig. 6 is a flow chart showing the operation of the base station shown in Fig. 2;
Fig. 7 is a flow chart showing the operation of the base station shown in Fig. 2;
Fig. 8 is a flow chart showing the operation of the mobile station shown in Fig. 3;
Fig. 9 is a flow chart showing the operation of the mobile station shown in Fig. 3;
Fig. 10 is a flow chart showing the operation of the mobile station shown in Fig. 3;
Fig. 11 is a block diagram showing the arrangement of a base station according to the second embodiment of the present invention;
Fig. 12 is a block diagram showing the arrangement of a base station according to the third embodiment of the present invention;
Fig. 13 is a block diagram showing the configuration of a mobile communication system according to a prior art; and
Fig. 14 is a view showing the flow of signals transmitted/received between a base station and mobile station of the prior art.

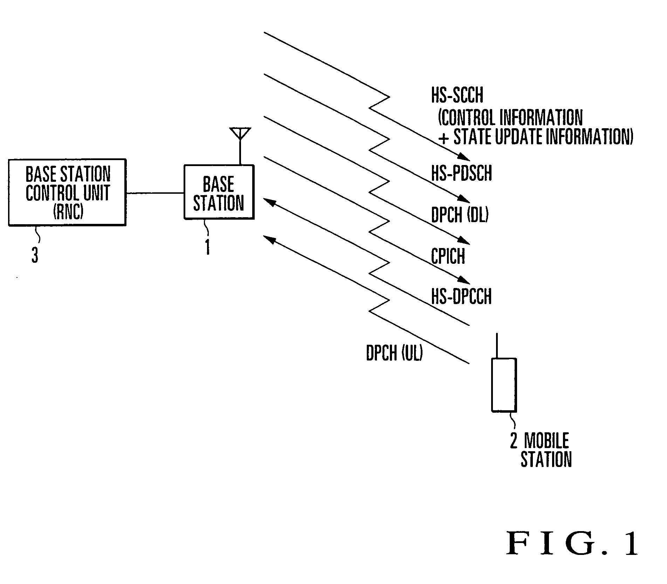

The configuration of a mobile communication system according to the embodiment of the present invention will be described with reference to Fig. 1. The mobile communication system according to the embodiment of the present invention comprises a base station 1, a mobile station 2, and a base station control unit [e.g., RNC (Radio Network Controller)] 3 connected to the base station 1.

The mobile station 2 always receives a 4-CH (channel) HS-SCCH (High Speed Shared Control CHannel) designated from the base station 1. The mobile station 2 detects information of the mobile station ID (identifier) contained in the HS-SCCH and determines whether the detected mobile station ID coincides with the mobile station ID of the mobile station that has received the channel.

Upon detecting the mobile station ID of the mobile station 2 by the HS-SCCH, the mobile station 2 that has received the channel receives an HS-PDSCH (High Speed Physical Downlink Shared CHannel) transmitted with a predetermined time delay from the HS-SCCH by using control information transmitted by the HS-SCCH.

In this embodiment, the base station 1 sends, to the mobile station 2 by using the HS-SCCH, not only the above control information but also transmission/reception state update information (a signal that notifies the state of the mobile station 2 in the current state update frame) (to be referred to as state update information hereinafter) that instructs a state [active/suspend] in a preset state update frame (e.g., a unit frame that controls the state of the mobile station 2 at a period of 100 sec).

In the active state, the mobile station 2 can receive normal HSDPA (High-Speed Downlink Packet Access). That is, in this state, control information necessary for packet transmission can be received, and power supplies to all circuits are ON.

In the suspend state, the mobile station 2 cannot receive HSDPA. The mobile station 2 is set in a power consumption saving mode in which power supplies to circuits related to the HSDPA reception are OFF.

Hence, the state (mode) of the mobile station 2 in its state update frame is set on the basis of state update information sent from the base station 1 at a preset period (predetermined interval).

The suspend state is set except when the mobile station 2 receives a packet or transmits user data or data (to be referred to as dedicated physical channel data hereinafter) [control information (various kinds of control information such as application, channel change, and handover) for a layer on the upper side of L (Layer) 1] such as upper layer control information to be transmitted by a dedicated physical channel. Accordingly, a packet can be quickly transmitted in response to a data transmission request while reducing the power consumption in the standby state for a packet.

In the suspend state, the base station 1 and mobile station 2 ensure radio resources (the information of dedicated physical channels such as quadrature code information, transmission power information, transmission timing information, and base station hardware resource). That is, while continuing physical channel setting information, one or both of transmission of DPCH (Dedicated Physical CHannel) [DL (downlink)/UL (uplink)] and reception of DPCH (UL/DL) are stopped.

With this arrangement, in the embodiment of the present invention, a packet receivable state is set in a short time after reception of an active notification. For this reason, delay of packet transmission decreases.

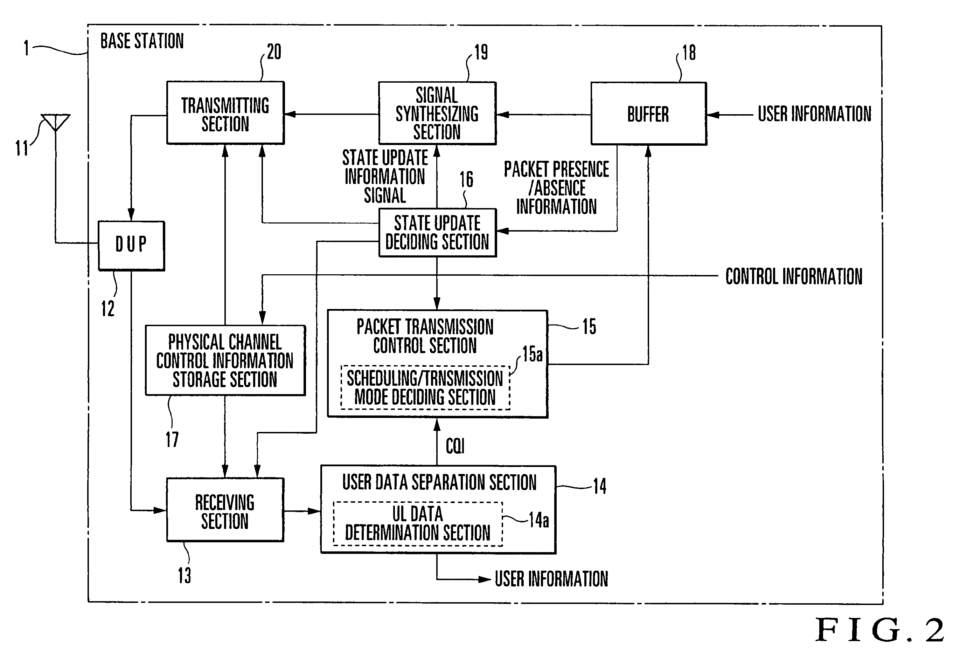

The arrangement of the base station according to the first embodiment of the present invention will be described next with reference to Fig. 2.

Referring to Fig. 2, the base station 1 comprises an antenna 11, a transmission/reception duplexer (DUP) 12 connected to the antenna 11, a receiving section 13 connected to the transmission/reception duplexer 12, a user data separation section 14 connected to the receiving section 13, and a packet transmission control section 15 connected to the user data separation section 14.

The base station 1 also comprises a state update deciding section 16 connected to the receiving section 13 and packet transmission control section 15, a physical channel control information storage section 17 connected to the receiving section 13, a buffer 18 connected to the packet transmission control section 15 and state update deciding section 16, a signal synthesizing section 19 connected to the buffer 18 and state update deciding section 16, and a transmitting section 20 connected to the signal synthesizing section 19, state update deciding section 16, transmission/reception duplexer 12, and physical channel control information storage section 17.

Known techniques can be applied to the call control part, voice input/output part, and display part of the base station 1, and a description of the arrangements and operations thereof will be omitted.

The receiving section 13 sends, to the user data separation section 14, a signal [DPCH (UL)] received through the antenna 11 and transmission/reception duplexer 12.

The user data separation section 14 has a UL data determination section 14a. The user data separation section 14 separates the reception signal from the receiving section 13 into user information (voice signal, image signal, and the like) and control information [CQI (Channel Quality Indication)]. The user information is sent to the above-described call control part, voice output part, and display part of the base station 1. The control information is sent to the packet transmission control section 15. The UL data determination section 14a determines the presence/absence of UL data.

The packet transmission control section 15 has a scheduling/transmission mode deciding section 15a. The packet transmission control section 15 executes transmission control for the packet temporarily stored in the buffer 18 on the basis of the CQI information from the user data separation section 14 and the active mobile station information from the state update deciding section 16. The scheduling/transmission mode deciding section 15a decides the scheduling/transmission mode on the basis of the CQI information.

The state update deciding section 16 decides on the basis of the presence/absence information of the packet temporarily stored in the buffer 18 whether the mobile station 2 should be set in the active state or suspend state. In accordance with the decision result, the state update deciding section 16 sends active mobile station information to the packet transmission control section 15, a state update information signal (state update information to the mobile station 2) to the signal synthesizing section 19, and a dedicated physical channel transmission/reception ON/OFF signal to the receiving section 13 and transmitting section 20.

When the base station 1 is set in the suspend state, the physical channel control information storage section 17 stores information used to ensure the radio resource (dedicated physical channel), i.e., physical channel setting information (quadrature code information, transmission timing information, and transmission power information).

The receiving section 13 and transmitting section 20 execute transmission/reception to/from the mobile station 2 on the basis of the physical channel setting information stored in the physical channel control information storage section 17.

The buffer 18 temporarily stores user information (packet). The signal synthesizing section 19 synthesizes the user information (packet) temporarily stored in the buffer 18 and the state update information signal from the state update deciding section 16 and sends them as an HS-SCCH, DPCH (DL), and HS-PDSCH from the antenna 11 through the transmitting section 20 and transmission/reception duplexer 12.

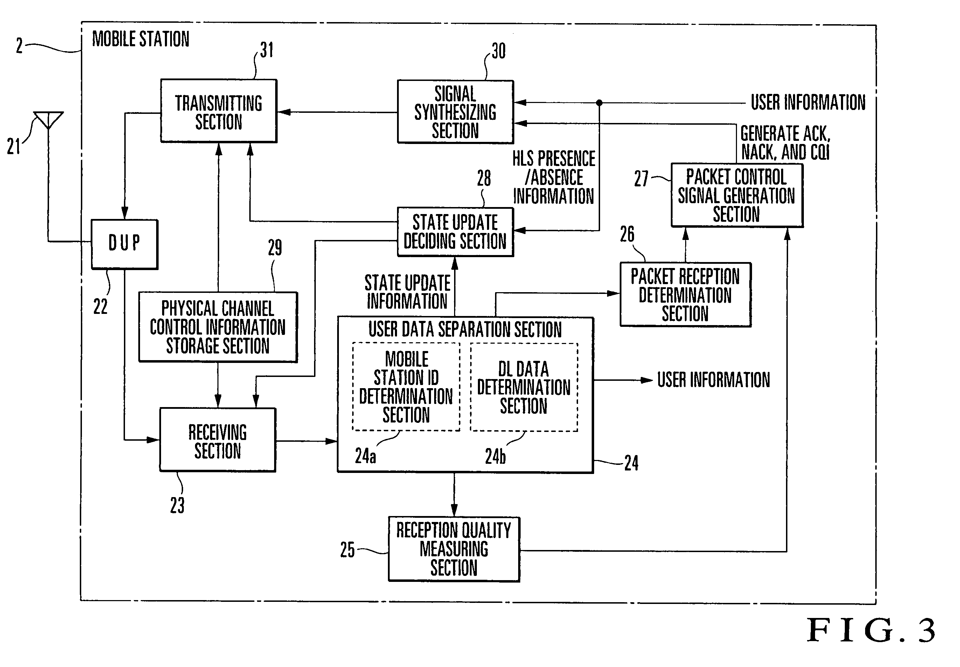

The arrangement of the mobile station according to the first embodiment of the present invention will be described next with reference to Fig. 3.

Referring to Fig. 3, the mobile station 2 comprises an antenna 21, a transmission/reception duplexer (DUP) 22 connected to the antenna 21, a receiving section 23 connected to the transmission/reception duplexer 22, a user data separation section 24 connected to the receiving section 23, a reception quality measuring section 25 connected to the user data separation section 24, and a packet reception determination section 26 connected to the user data separation section 24.

The mobile station 2 also comprises a packet control signal generation section 27 connected to the packet reception determination section 26 and reception quality measuring section 25, a state update deciding section 28 connected to the user data separation section 24 and receiving section 23, a physical channel control information storage section 29 connected to the receiving section 23, a signal synthesizing section 30 connected to the packet control signal generation section 27, and a transmitting section 31 connected to the signal synthesizing section 30, transmission/reception duplexer 22, physical channel control information storage section 29, and state update deciding section 28.

Known techniques can be applied to the call control part, voice input/output part, and display part of the mobile station 2, and a description of the arrangements and operations thereof will be omitted.

The receiving section 23 sends, to the user data separation section 24, a signal [CPICH (Common PIlot CHannel), DPCH (DL), and HS-PDSCH] received through the antenna 21 and transmission/reception duplexer 22.

The user data separation section 24 has a mobile station ID determination section 24a and DL data determination section 24b. The user data separation section 24 separates the reception signal from the receiving section 23 into user information (voice signal, image signal, and the like) and control information. The user information is sent to the above-described call control part, voice output part, and display part of the mobile station 2. The control information is sent to the packet reception determination section 26 and state update deciding section 28. The mobile station ID determination section 24a detects the information of the mobile station ID (identifier) contained in the HS-SCCH and determines whether the mobile station ID coincides with the mobile station ID of the mobile station 2. The DL data determination section 24b determines the presence/absence of transmission of dedicated physical channel data (DL).

The reception quality measuring section 25 measures the reception quality [Ec/Io (energy per chip/interference wave power per unit frequency)] of the CPICH from the receiving section 23 and outputs the measurement result to the packet control signal generation section 27.

The packet reception determination section 26 determines on the basis of the control information from the user data separation section 24 whether the control information (a signal to send a notification of the packet transmission timing) of the HS-SCCH is present or whether the packet from the base station 1 is normally received. The packet reception determination section 26 outputs the determination result to the packet control signal generation section 27.

The packet control signal generation section 27 generates ACK/NACK (ACKnowledgement/Negative ACKnowledgements) as notification confirmation information of the received packet on the basis of the determination result from the packet reception determination section 26 and CQI information on the basis of the measurement result from the reception quality measuring section 25 and outputs the ACK/NACK and CQI to the signal synthesizing section 30.

On the basis of the control information from the user data separation section 24 and the dedicated physical channel data presence/absence information in the user information input to the signal synthesizing section 30, the state update deciding section 28 decides the state (active/suspend) in the state update frame and transmits the state to the receiving section 23 and transmitting section 31.

When the mobile station 2 is set in the suspend state, the physical channel control information storage section 29 stores information used to ensure the radio resource (dedicated physical channel), i.e., physical channel setting information. The receiving section 23 and transmitting section 31 execute transmission/reception to/from the base station 1 on the basis of the physical channel setting information stored in the physical channel control information storage section 29.

The signal synthesizing section 30 synthesizes the information (ACK/NACK and CQI) from the packet control signal generation section 27 and an external input signal from the call control part or voice input part of the mobile station 2 and sends them as a DPCH (UL) and HS-DPCCH from the antenna 21 through the transmitting section 31 and transmission/reception duplexer 22.

The operation of the mobile communication system according to the first embodiment of the present invention will be described next with reference to Figs. 1 to 10.

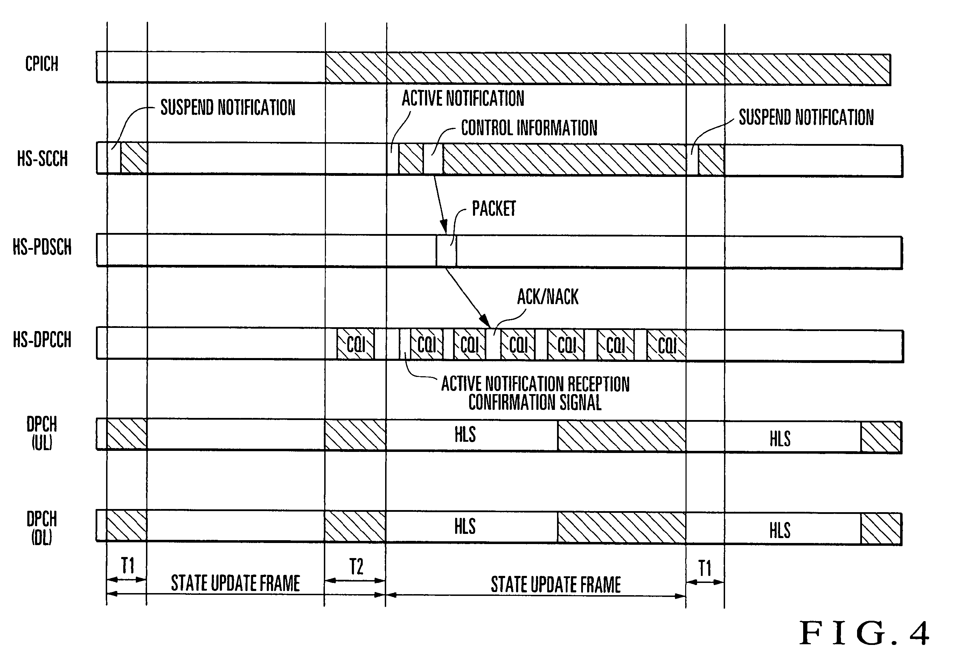

In this embodiment, only when a packet arrives, "active" is designated by the state update information. When dedicated physical channel data [HLS (Higher Layer Signaling) shown in Fig. 4] is present, the state is "suspend". Only transmission/reception of the DPCH is continued from the start of the state update frame.

In this embodiment, when the mobile station 2 normally receives the state update information, and the state in the state update frame is designated as "active", the mobile station 2 transmits an active notification reception confirmation signal by an uplink channel.

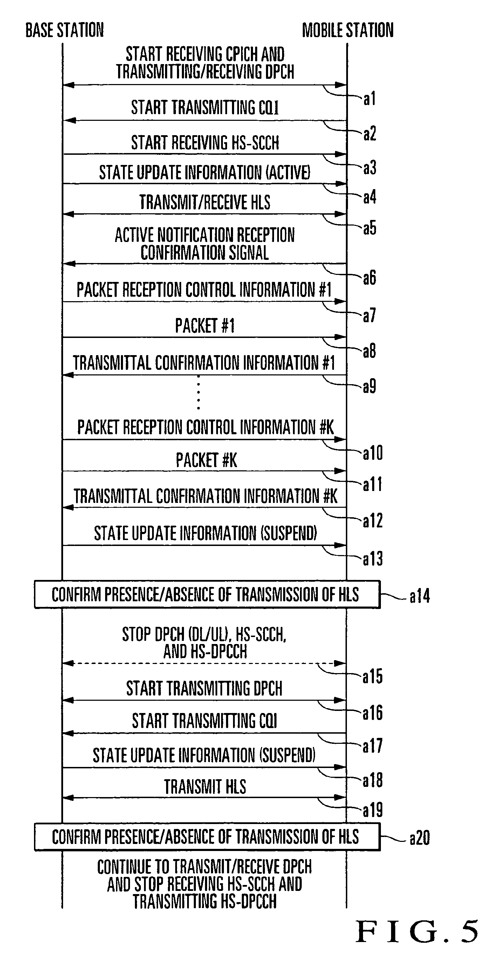

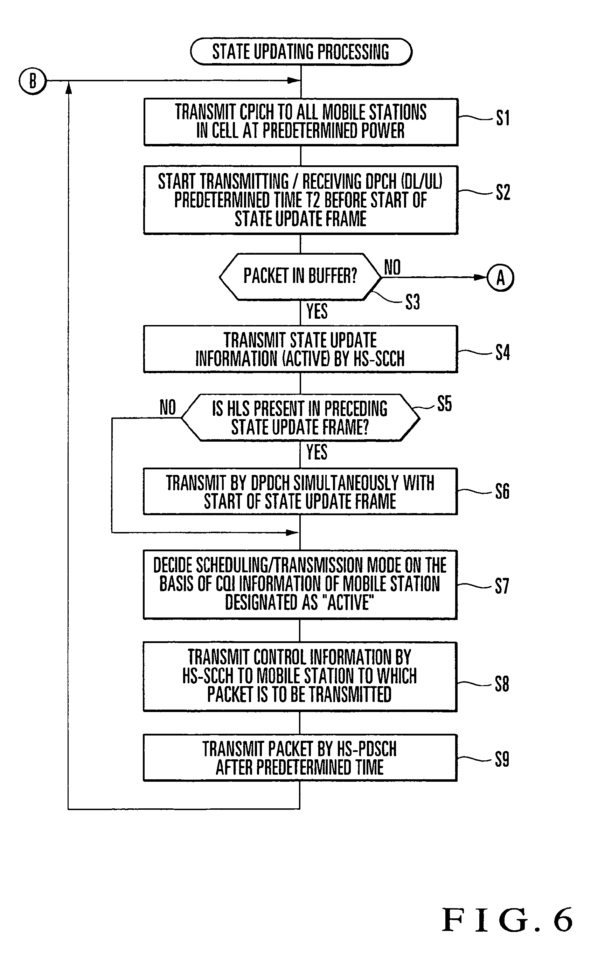

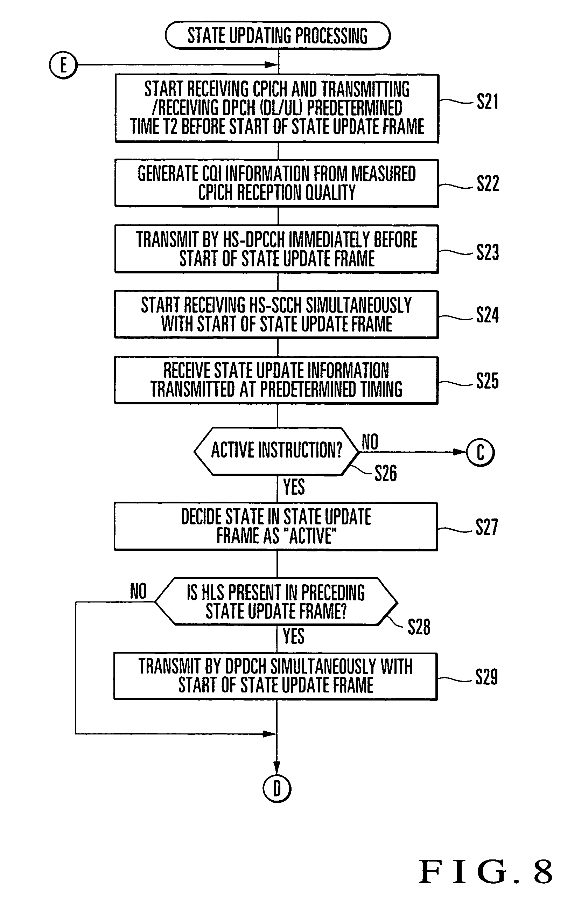

The transmitting section 20 of the base station 1 transmits a CPICH to the mobile station 2 in the cell managed by the base station 1 at a predetermined power (step S1 in Fig. 6). The receiving section 23 of the mobile station 2 starts receiving the CPICH, and the receiving section 23 and transmitting section 31 of the mobile station 2 start transmitting/receiving the DPCH (DL/UL) a predetermined time T2 before the start of the state update frame (step S21 in Fig. 8) (a1 in Fig. 5).

The reception quality measuring section 25 of the mobile station 2 measures the CPICH reception quality. The packet control signal generation section 27 generates CQI information on the basis of the output from the reception quality measuring section 25 (step S22 in Fig. 8). The signal synthesizing section 30 transmits the CQI information from the packet control signal generation section 27 by an HS-DPCCH immediately before the start of the state update frame (step S23 in Fig. 8) (a2 in Fig. 5).

The receiving section 23 of the mobile station 2 starts receiving the HS-SCCH simultaneously with the start of the state update frame (step S24 in Fig. 8) (a3 in Fig. 5).

The receiving section 13 and transmitting section 20 of the base station 1 start transmitting/receiving the DPCH (DL/UL) the predetermined time T2 before the start of the state update frame (step S2 in Fig. 6) (a1 in Fig. 5). Simultaneously, state update information is transmitted by the HS-SCCH. In this case, the state update deciding section 16 of the base station 1 decides that the mobile station 2 having a packet should be set in the active state and notifies the mobile station 2 of "active" by sending the state update information by the HS-SCCH (steps S3 and S4 in Fig. 6) (a4 in Fig. 5).

The receiving section 23 of the mobile station 2 receives the state update information transmitted at a predetermined timing (step S25 in Fig. 8). When "active" is instructed for the mobile station 2 that has received the state update information (step S26 in Fig. 8), the state update deciding section 28 of the mobile station 2 decides the state in the state update frame as "active" (step S27 in Fig. 8).

When dedicated physical channel data to be transmitted is present (when the preceding state update frame contains dedicated physical channel data) (step S5 in Fig. 6 and step S28 in Fig. 8), both the signal synthesizing section 19 of the base station 1 and the signal synthesizing section 30 of the mobile station 2 transmit the dedicated physical channel data by a DPDCH simultaneously with the start of the state update frame (step S6 in Fig. 6 and step S29 in Fig. 8) (a5 in Fig. 5).

When the base station 1 instructs "active", the packet control signal generation section 27 of the mobile station 2 generates an active notification reception confirmation signal. The signal synthesizing section 30 transmits the generated active notification reception confirmation signal to the base station 1 through the transmitting section 31 at a predetermined timing (a6 in Fig. 5).

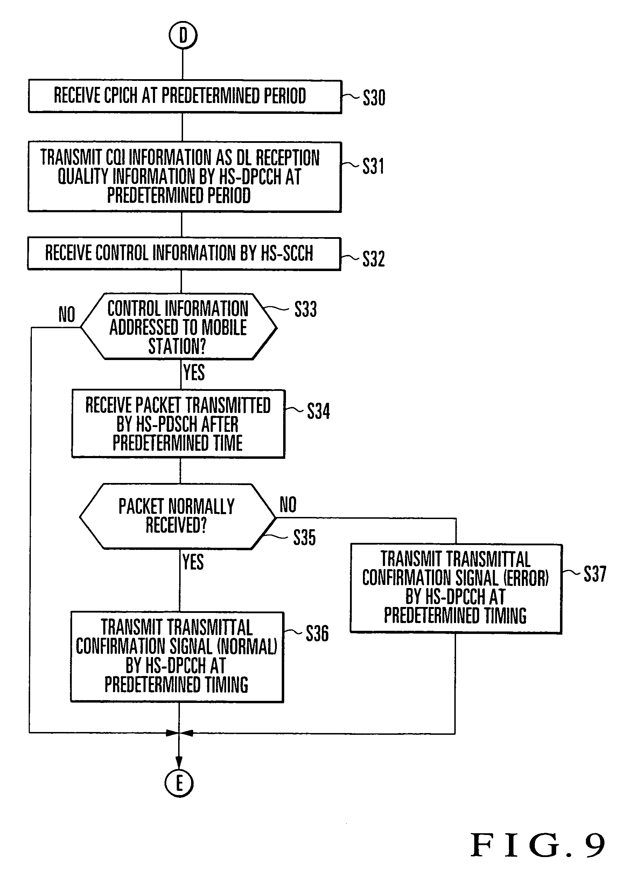

The receiving section 23 of the mobile station 2 receives the CPICH at a predetermined period (step S30 in Fig. 9). The signal synthesizing section 30 transmits the CQI information generated on the basis of the channel quality indication by the HS-DPCCH at a predetermined period (step S31 in Fig. 9).

When the mobile station 2 designated as "active" receives the active notification reception confirmation signal transmitted at a predetermined timing, the scheduling/transmission mode deciding section 15a of the base station 1 decides the scheduling/transmission mode on the basis of the CQI information (step S7 in Fig. 6).

The base station 1 transmits by the HS-SCCH control information to the mobile station 2 to which the packet is to be transmitted (step S8 in Fig. 6) (a7 in Fig. 5). After a predetermined time, the packet is transmitted by the HS-PDSCH (step S9 in Fig. 6) (a8 in Fig. 5).

The receiving section 23 of the mobile station 2 receives the control information by the HS-SCCH (step S32 in Fig. 9) (a7 in Fig. 5). The mobile station ID determination section 24a detects and determines the mobile station ID information contained in the received HS-SCCH. If the control information is addressed to the mobile station 2 that has received the control information (step S33 in Fig. 9), the mobile station 2 receives the packet transmitted by the HS-PDSCH after the predetermined time (step S34 in Fig. 9) (a8 in Fig. 5).

The packet control signal generation section 27 of the mobile station 2 transmits a transmittal confirmation signal representing whether the packet is properly received, by the HS-DPCCH at a predetermined timing (steps S35 to S37 in Fig. 9) (a9 in Fig. 5). The packet transmission/reception processing is repeatedly executed until the last packet is transmitted/received (a10 to a12 in Fig. 5).

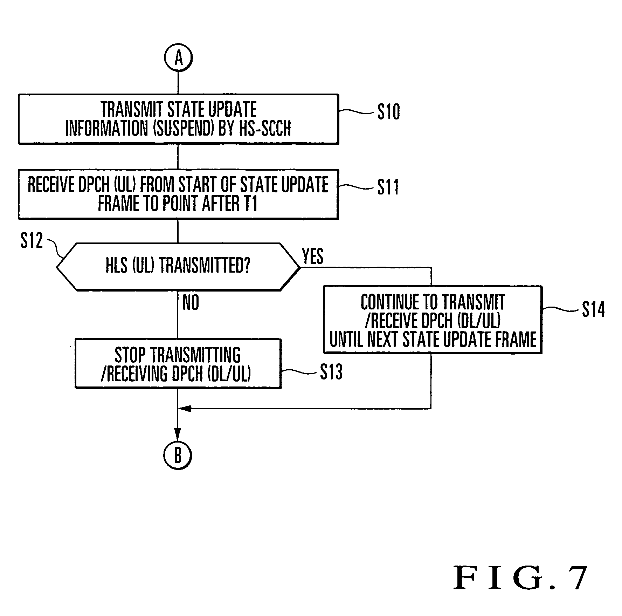

When the buffer 18 has no packet (step S3 in Fig. 6), the state update deciding section 16 of the base station 1 decides that the mobile station 2 should be set in the suspend state and notifies the mobile station 2 of "suspend" by sending the state update information by the HS-SCCH (step S10 in Fig. 7) (a13 in Fig. 5).

The receiving section 13 of the base station 1 receives the DPCH (UL) from the start of the state update frame to a point after a predetermined time T1 (step S11 in Fig. 7). The UL data determination section 14a confirms that no dedicated physical channel data (UL) is transmitted (step S12 in Fig. 7) (a14 in Fig. 5). After that, the receiving section 13 and transmitting section 20 of the base station 1 stop transmitting/receiving the DPCH (DL/UL) (step S13 in Fig. 7) (a15 in Fig. 5).

The scheduling/transmission mode deciding section 15a of the base station 1 does not schedule packet transmission to the mobile station 2 in this state update frame.

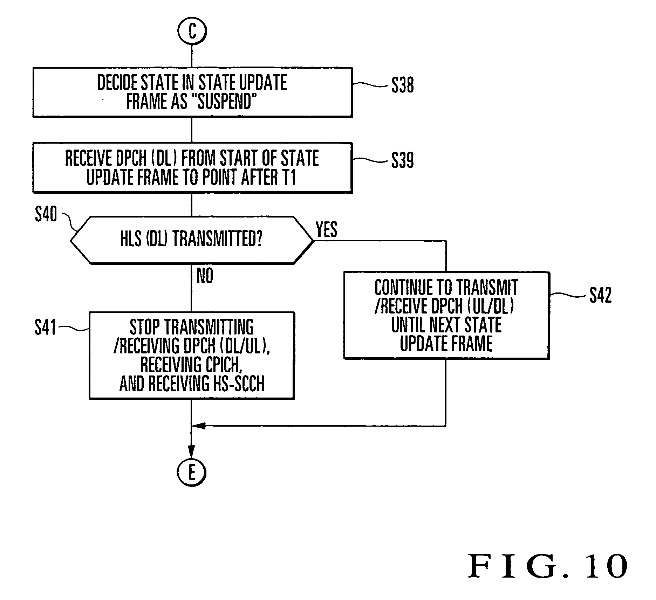

The receiving section 23 of the mobile station 2 receives the state update information transmitted at a predetermined timing (step S25 in Fig. 8). When "suspend" is instructed for the mobile station 2 that has received the state update information (step S26 in Fig. 8), the state update deciding section 28 decides the state in the state update frame as "suspend" (step S38 in Fig. 10).

The receiving section 23 of the mobile station 2 receives the DPCH (DL) from the start of the state update frame to a point after the predetermined time T1 (step S39 in Fig. 10). The DL data determination section 24b of the mobile station 2 confirms that no dedicated physical channel data (DL) is transmitted (step S40 in Fig. 10) (a14 in Fig. 5). After that, the receiving section 23 and transmitting section 31 of the mobile station 2 stop transmitting/receiving the DPCH (DL/UL), receiving the CPICH, and receiving the HS-SCCH (step S41 in Fig. 10) (a15 in Fig. 5).

When the buffer 18 has no packet (step S3 in Fig. 6), the state update deciding section 16 of the base station 1 decides that the mobile station 2 should be set in the suspend state. The state update deciding section 16 of the base station 1 notifies the mobile station 2 of "suspend" by sending the state update information by the HS-SCCH (step S10 in Fig. 7) (a18 in Fig. 5).

The receiving section 13 of the base station 1 receives the DPCH (UL) from the start of the state update frame to a point after the predetermined time T1 (step S11 in Fig. 7). When the DPCH (UL) contains dedicated physical channel data (UL) (step S12 in Fig. 7) (a19 and a20 in Fig. 5), transmission/reception of the DPCH (UL/DL) is continued until the next state update frame (step S14 in Fig. 7). In this case, the scheduling/transmission mode deciding section 15a of the base station 1 does not schedule packet transmission to the mobile station 2 in this state update frame.

The receiving section 23 of the mobile station 2 receives the state update information transmitted at a predetermined timing (step S25 in Fig. 8). When "suspend" is instructed for the mobile station 2 that has received the state update information (step S26 in Fig. 8), the state update deciding section 28 decides the state in the state update frame as "suspend" (step S38 in Fig. 10).

The receiving section 23 of the mobile station 2 receives the DPCH (DL) from the start of the state update frame to a point after the predetermined time T1 (step S39 in Fig. 10). The DL data determination section 24b confirms that dedicated physical channel data (DL) is transmitted (step S40 in Fig. 10) (a19 and a20 in Fig. 5).

After that, the receiving section 23 and transmitting section 31 of the mobile station 2 continue to transmit/receive the DPCH (UL/DL) until the next state update frame (step S42 in Fig. 10). Fig. 4 shows the flow of the above-described signals.

The operations of the base station 1 and mobile station 2 have been described above. As an exceptional case, a communication error may occur in the propagation channel between the base station 1 and the mobile station 2.

That is, although the base station 1 instructs "active", an error may occur during update information reception by the mobile station 2, and the mobile station 2 may decide "suspend". In this case, the base station 1 cannot receive the active notification reception confirmation signal from the mobile station 2, which should be transmitted at a predetermined timing.

Hence, the base station 1 stops transmitting/receiving the DPCH (DL/UL) to/from the mobile station 2 after the predetermined transmission timing of the active notification reception confirmation signal. In the state update frame, packet scheduling to the mobile station 2 is not executed.

On the other hand, since the error occurs during state update information reception by the mobile station 2, the state update deciding section 28 decides the state of the mobile station in this state update frame as "suspend". Hence, the receiving section 23 and transmitting section 31 of the mobile station 2 stop receiving the CPICH, receiving the DPCH (DL) and transmitting the DPCH (UL), and receiving the HS-SCCH the predetermined time T1 after the start of the state update frame.

As described above, in this embodiment, DPCH transmission/reception, HS-SCCH reception, and CPICH reception can be stopped while keeping the physical channel setting information held in the physical channel control information storage sections 17 and 29 of the base station 1 and mobile station 2.

For this reason, the delay from the packet arrival at the base station 1 to the start of transmission can be decreased.

In this embodiment, the mobile station 2 stops transmission/reception while continuing the physical channel setting information. For this reason, the mobile station is set in the packet receivable state in a short time after reception of the active notification. In this case, if no active notification is received, and the state update information indicates "suspend", the mobile station 2 can reduce the power consumption.

When the mobile station 2 receives the active notification and then notifies the base station 1 of the CQI information and starts standing by for the packet, the delay until the start of packet transmission increases because of notification of the CQI information.

In this embodiment, however, the mobile station 2 transmits the CQI information before the state update information. Accordingly, packet transmission can be started (control information can be transmitted by the HS-SCCH) immediately after transmission of the state update information. For this reason, the delay from the packet arrival at the base station 1 to the start of transmission can be decreased.

In this embodiment, the mobile station 2 that has normally received the active notification transmits the active notification reception confirmation signal to notify the base station 1 that the mobile station is set in the active state. Hence, if the mobile station 2 has erroneously received the state update information and is set in the suspend state although "active" is instructed for the mobile station 2, the base station 1 can also stop DPCH transmission and inhibit packet scheduling.

More specifically, since wasteful packet transmission or DPCH transmission from the base station 1 can be stopped, the power resource can be assigned to another transmission. Hence, the system throughput can be increased.

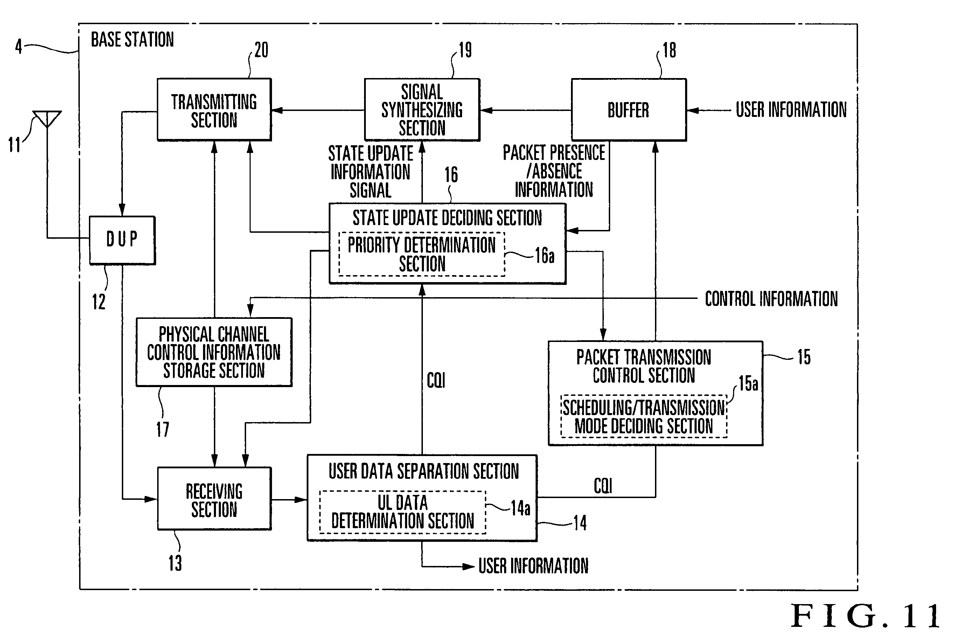

The arrangement of a base station according to the second embodiment of the present invention will be described next with reference to Fig. 11. Referring to Fig. 11, in a base station 4 according to the second embodiment of the present invention, a user data separation section 14 is connected to a state update deciding section 16. CQI information is sent from the user data separation section 14 to the state update deciding section 16.

The state update deciding section 16 has a priority determination section 16a which preferentially sets, in an active state, a mobile station 2 for which the packet transmission priority estimated by the CQI information has a predetermined value or more.

Except the above point, the remaining components have the same arrangement as that of the base station 4 according to the first embodiment of the present invention shown in Fig. 2. The same reference numerals as in Fig. 2 denote the same constituent elements in Fig. 11. The operations of the same constituent elements except the user data separation section 14 and state update deciding section 16 are the same as in the first embodiment of the present invention.

The state update deciding section 16 also uses CQI information transmitted from the mobile station 2 in advance. The state update deciding section 16 decides on the basis of the CQI information and the presence/absence information of a packet temporarily stored in a buffer 18 whether the mobile station 2 is to be set in the active state or suspend state.

In accordance with the decision result from the state update deciding section 16, active mobile station information is sent to a packet transmission control section 15, a state update information signal (state update information to the mobile station 2) is sent to a signal synthesizing section 19, and a dedicated physical channel transmission/reception ON/OFF signal is sent to a receiving section 13 and transmitting section 20.

With this arrangement, in the second embodiment of the present invention, the mobile station 2 transmits the CQI information immediately before the state update frame. If the mobile station 2 is set in the active state in the state update frame, the base station 4 can immediately start packet transmission to the mobile station 2. Hence, the delay of packet transmission can be effectively reduced.

More specifically, normally, the base station 4 receives the CQI information and then decides the packet transmission mode. If the mobile station 2 is designated as "active" by the state update information and then starts transmitting the CQI information, the base station 4 cannot start packet transmission before reception of the CQI information. This embodiment can solve this problem.

In this embodiment, the priority determination section 16a of the base station 4 preferentially sets, in the active state, the mobile station 2 for which the packet transmission priority estimated by the CQI information has a predetermined value or more. Since a mobile station having a high downlink channel reception quality can be set in the active state, the packet transmission efficiency can be increased. For this reason, the system throughput can be increased.

In this embodiment, the state update deciding section 16 of the base station 4 notifies a mobile station having a poor downlink channel reception quality of "suspend". Hence, in addition to the effect of the first embodiment of the present invention, the mobile station 2 for which the downlink channel reception quality is poor, and a packet is transmitted at a low probability during the current state update frame can be set in the suspend state. Hence, the power consumption of the mobile station 2 can be reduced.

Assume that the base station 4 transmits the active notification to the mobile station 2 independently of the channel quality. When the base station 4 preferentially transmits a packet to the mobile station 2 having a high channel quality (when, e.g., a Maximum C/I scheduler is used), the active notification is transmitted to even the mobile station 2 for which the channel quality is poor, and a packet is transmitted at a low probability.

Hence, the ratio of the time of the suspend state of the mobile station 2 decreases. In this embodiment, the mobile station 2 for which the packet transmission priority estimated by the CQI information has a predetermined value or less may be notified of "suspend", as described above, to reduce the power consumption of the mobile station 2.

In this embodiment, when the mobile station 2 cannot properly receive the transmission/reception state update information, the state of the mobile station 2 in the state update frame is decided as "active" independently of the contents of the state update information.

Accordingly, even when the mobile station 2 erroneously receives the active notification, the mobile station 2 can receive the packet, and the delay can be decreased. In addition, since wasteful packet transmission from the base station 4 can be avoided, the system throughput can be increased.

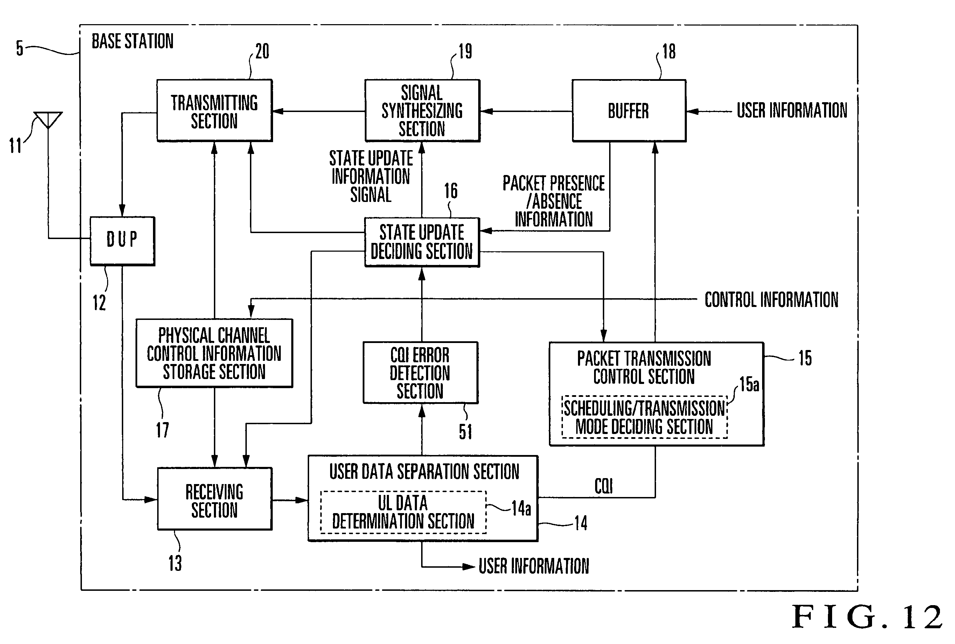

The arrangement of a base station according to the third embodiment of the present invention will be described with reference to Fig. 12. Referring to Fig. 12, a base station 5 according to the third embodiment of the present invention further comprises a CQI error detection section 51 which is connected to a state update deciding section 16 and user data separation section 14. CQI information is sent from the user data separation section 14 to the CQI error detection section 51.

Except the above point, the remaining components have the same arrangement as that of the base station 1 according to the first embodiment of the present invention shown in Fig. 2. The same reference numerals as in Fig. 2 denote the same constituent elements in Fig. 12. The operations of the same constituent elements except the user data separation section 14 and state update deciding section 16 are the same as in the first embodiment of the present invention.

The CQI error detection section 51 executes error detection for the CQI information from the user data separation section 14 and sends the detection result to the state update deciding section 16. The state update deciding section 16 also uses the CQI information error detection result by the CQI error detection section 51. The state update deciding section 16 decides on the basis of the CQI information error detection result and the presence/absence information of a packet temporarily stored in a buffer 18 whether a mobile station 2 is to be set in the active state or suspend state.

In accordance with the decision result, the state update deciding section 16 sends active mobile station information to a packet transmission control section 15, a state update information signal (state update information to the mobile station 2) to a signal synthesizing section 19, and a dedicated physical channel transmission/reception ON/OFF signal to a receiving section 13 and transmitting section 20.

With the above arrangement, in the third embodiment of the present invention, the base station 5 can determine the CRC (Cyclic Redundancy Check) added to the CQI information, preferentially select the mobile station 2 that has received the state update information without any error, and notify the mobile station 2 of the change to the active state.

In this embodiment, in addition to the effect of the first embodiment, the mobile station 2 which can appropriately select the transmission mode (TFRC) is preferentially set in the active state. The packet transmission efficiency can be increased, and the system throughput can be increased. Hence, in this embodiment, the delay of packet transmission can be effectively decreased.

In this embodiment, the mobile station 2 that fails to receive the CQI information is set in the suspend state. Accordingly, the ratio of the time of the suspend state of the mobile station 2 can be increased. Hence, the power consumption of the mobile station 2 can be reduced.

In the present invention, the channel to transmit the state update information need not always use the HS-SCCH to transmit the HSDPA control information. A dedicated control channel may separately be set.

In the present invention, the active notification reception confirmation signal may be transmitted by using either the HS-DPCCH or another control channel.

The present invention can be applied not only to the HSDPA but also to a two-way channel DCH (Dedicated CHannel) used to transmit user data or a common downlink channel FACH (Forward Access CHannel) used to transmit control information and user data.

That is, the present invention can be applied to packet communication except high-speed packet communication such as the HSDPA service. The present invention is not limited to the above-described embodiments. The above embodiments may be combined.

The present invention can take the following forms in association with the appended claims.
(1) A mobile station which sets a radio channel to a base station and receives a packet transmitted from the base station by using the radio channel comprises a state update deciding section which updates the state of the mobile station in accordance with transmission/reception state update information that is transmitted from the base station and indicates update of a packet receivable state in the mobile station.
   In addition, the mobile station sets one of an active state in which the mobile station can receive the packet and a suspend state in which the mobile station cannot receive the packet, on the basis of the transmission/reception state update information. In the suspend state, the mobile station continuously holds dedicated physical channel setting information in the radio channel.
   Furthermore, upon receiving a change instruction to the active state, the mobile station starts at least one of standby for the packet and transmission/reception of dedicated physical channel data to be transmitted by a dedicated physical channel.
(2) The mobile station of (1) is characterized in that in the suspend state, at least one of transmission of dedicated physical channel data and reception of dedicated physical channel data is stopped while the setting information in the radio channel is continuously held.
(3) The mobile station of (1) or (2) is characterized in that the active state is set when the transmission/reception state update information is not normally received.
(4) The mobile station of any one of (1) to (3) is characterized in that when the change instruction to the active state is normally received, a notification reception confirmation signal of the change instruction is transmitted to the base station.
(5) The mobile station of (4) is characterized in that an existing signal is used as the notification reception confirmation signal.
(6) The mobile station of (4) is characterized in that a channel quality indication that represents the reception quality of a downlink channel is used as the notification reception confirmation signal.
(7) The mobile station of (6) is characterized in that the channel quality indication is transmitted to the base station immediately before the transmission/reception state update information is received.
(8) The mobile station of any one of (1) to (7) is characterized in that one of transmission of the dedicated physical channel and reception of the dedicated physical channel is started on the basis of the setting information continuously held when the mobile station changes from the suspend state to the active state.
(9) The mobile station of one of (1) to (8) is characterized in that the transmission/reception state update information is transmitted at a timing known in advance.
(10) A base station which sets a radio channel to a mobile station and transmits a packet to the mobile station by using the radio channel comprises a means for notifying the mobile station of transmission/reception state update information that indicates update of a packet receivable state in the mobile station.
   In addition, the base station sets one of an active state in which the mobile station can receive the packet and a suspend state in which the mobile station cannot receive the packet, on the basis of the transmission/reception state update information.
   Furthermore, in the suspend state, the base station stops at least one of transmission of dedicated physical channel data and reception of the dedicated physical channel data to be transmitted by a dedicated physical channel while continuously holding dedicated physical channel setting information in the radio channel.
(11) The base station of (10) is characterized in that if the notification reception confirmation signal is not received, packet transmission to the mobile station is stopped.
(12) The base station of (10) or (11) is characterized in that a mobile station having a high channel quality is preferentially selected and notified of a change instruction to the active state.
(13) The base station of any one of (10) to (12) is characterized in that one of transmission of the dedicated physical channel and reception of the dedicated physical channel is started on the basis of the setting information continuously held when the mobile station changes from the suspend state to the active state.
(14) The base station of one of (10) to (13) is characterized in that the transmission/reception state update information is transmitted at a timing known in advance.
(15) A packet communication method for a mobile communication system in which a radio channel is set between a base station and a mobile station, and a packet is transmitted from the base station to the mobile station by using the radio channel comprises the step of causing the base station to notify the mobile station of transmission/reception state update information that indicates update of a packet receivable state in the mobile station, wherein on the basis of the transmission/reception state update information, one of an active state in which the mobile station can receive the packet and a suspend state in which the mobile station cannot receive the packet is set.
   In the packet communication method for the mobile communication system, the base station and the mobile station continuously hold dedicated physical channel setting information in the radio channel in the suspend state. Upon receiving a change instruction to the active state, the mobile station starts at least one of standby for the packet and transmission/reception of dedicated physical channel data to be transmitted by a dedicated physical channel.
(16) The packet communication method of (15) is characterized in that in the suspend state, the mobile station stops at least one of transmission of the dedicated physical channel data and reception of the dedicated physical channel data while continuously holding the setting information in the radio channel.
(17) The packet communication method of (15) or (16) is characterized in that in the suspend state, the base station stops at least one of transmission of the dedicated physical channel data and reception of the dedicated physical channel data while continuously holding the setting information in the radio channel.
(18) The packet communication method of any one of (15) to (17) is characterized in that the mobile station is set in the active state when the transmission/reception state update information is not normally received.
(19) The packet communication method of any one of (15) to (18) is characterized in that when the change instruction to the active state is normally received, the mobile station transmits a notification reception confirmation signal of the change instruction to the base station.
(20) The packet communication method of (19) is characterized in that the mobile station uses an existing signal as the notification reception confirmation signal.
(21) The packet communication method of (19) is characterized in that the mobile station uses a channel quality indication that represents the reception quality of a downlink channel as the notification reception confirmation signal.
(22) The packet communication method of (20) or (21) is characterized in that if the notification reception confirmation signal is not received, the base station stops packet transmission to the mobile station.
(23) The packet communication method of (21) or (22) is characterized in that the mobile station notifies the base station of the channel quality indication immediately before the transmission/reception state update information is received.
(24) The packet communication method of any one of (15) to (23) is characterized in that the base station preferentially selects a mobile station having a high channel quality and notifies the mobile station of a change instruction to the active state.
(25) The packet communication method of any one of (15) to (24) is characterized in that the transmission/reception state update information is transmitted at a timing known in advance.
(26) The packet communication method of any one of (15) to (25) is characterized in that the base station and the mobile station start one of transmission of the dedicated physical channel and reception of the dedicated physical channel on the basis of the setting information continuously held when the mobile station changes from the suspend state to the active state.

According to the above-described embodiments, in a mobile communication system in which a radio channel is set in advance between a base station and a mobile station, and control information, which notifies the mobile station of transmission of a packet to be transmitted from the base station to the mobile station by using the radio channel, is received so that the mobile station can receive the packet, transmission/reception state update information that indicates update of a packet receivable state in the mobile station is sent from the base station to the mobile station. One of an active state in which the mobile station can receive the control information for packet transmission and a suspend state in which the mobile station cannot receive the control information for packet transmission is set on the basis of the transmission/reception state update information. The base station and mobile station continuously hold setting information in the radio channel in the suspend state.

More specifically, the mobile communication system of the present invention introduces a state update frame (a unit frame that executes state control of the mobile station at a period of 100 sec). Only a mobile station that can transmit a packet in the state update frame is set in the active state. The remaining mobile stations are set in the suspend state while causing them to ensure radio resources (the information of dedicated physical channels such as quadrature code information, transmission power information, transmission timing information, and base station hardware resource).

The active state is a state in which the mobile station can receive a normal HSDPA (High-Speed Downlink Packet Access), i.e., the mobile station can receive control information necessary for packet transmission. In this state, power supplies to all circuits are ON. The suspend state is a state in which the mobile station cannot receive the HSDPA. In this state, the mobile station is set in the power consumption saving mode wherein power supplies to circuits related to the HSDPA reception are OFF.

Accordingly, in the mobile communication system of the present invention, the physical channel resource is held, or information necessary for packet transmission is transmitted in advance. With this operation, packet transmission to the mobile station can be executed at an early timing. Hence, the delay of packet transmission can be effectively decreased. Each mobile station receives state update information at a timing designated from the network and decides the state of the mobile station in each state update frame. When each mobile station is set in the suspend state, the power consumption can be reduced.

During this time, no control signal is transmitted from the base station to the mobile station in the suspend state. For this reason, the power consumption of the base station can be reduced, and the packet transmission efficiency can be increased. In addition, the system throughput can be increased. Hence, the delay for all mobile stations can be decreased.

This will be described in more detail. In the mobile communication system of the present invention, the transmission/reception state update information is sent to the mobile station at a predetermined timing. In this case, the base station and mobile station transmit/receive in advance a control signal to set a radio channel and set a physical channel. The base station notifies the mobile station of the transmission/reception state update information (TRX state update info) at a predetermined timing. When a packet, user data, or data (to be referred to as dedicated physical channel data hereinafter) such as upper layer control information to be transmitted by a dedicated physical channel is to be transmitted, the base station transmits a change instruction to the state (active notification) to the mobile station.

Upon receiving the active notification, the mobile station starts one or both of standby for a packet [reception of an HS-SCCH (High Speed Shared Control CHannel)] and reception of dedicated physical channel data [DPCH (Dedicated Physical CHannel) (UL: uplink) and DPCH (DL: downlink)].

In the suspend state, the mobile station stops one or both of transmission of the DPCH (UL) and reception of the DPCH (DL) while ensuring the radio resource (dedicated physical channel).

In the suspend state, the base station stops one or both of transmission of the DPCH (DL) and reception of the DPCH (UL) while ensuring the radio resource. When the base station stops transmitting the DPCH (DL), the transmission power that the base station assigns to the DPCH can be reduced, so the power assigned to the HS-PDSCH (High Speed Physical Downlink Shared CHannel) can be increased.

If the mobile station cannot receive the transmission/reception state update information, the active state is set. If an active notification reception error occurs, no packet can be transmitted until the next active notification. However, with the above mechanism, when the base station transmits the active notification, and the mobile station fails to receive it, packet transmission/reception can be executed.

When the mobile station normally receives the active notification, an active notification reception confirmation signal is transmitted to the base station. Instead, a transmittal confirmation signal as a known signal may be transmitted in place of the active notification reception confirmation signal. When a CQI (Channel Quality Indication) is received, it may be determined as the active notification reception confirmation signal.

When the mobile station cannot receive the transmission/reception state update information, the active state is set. Even in this case, if the base station cannot receive the active notification reception confirmation signal, no packet is transmitted. Accordingly, wasteful packet transmission can be avoided.

As described above, in the mobile communication system of the present invention, transmission/reception is stopped while physical channel setting is continued. For this reason, the packet receivable state can be set in a short time after reception of an active notification. In addition, the of packet transmission can be decreased.

In the suspend state, the base station stops one or both of transmission of the DPCH (DL) and reception of the DPCH (UL) while ensuring the radio resource. Accordingly, the transmission power that the base station assigns to the DPCH can be reduced, and the power assigned to the HS-PDSCH can be increased. For this reason, the system throughput can be increased.

When the mobile station cannot receive the transmission/reception state update information, the active state is set. Even when the base station transmits the active notification, and the mobile station fails to receive it, packet transmission/reception can be executed. Since the delay of packet transmission can be decreased, and wasteful packet transmission can be avoided, the system throughput can be increased.

When the base station cannot receive the active notification reception confirmation signal, packet transmission is inhibited. Since wasteful packet transmission can be avoided, the system throughput can be increased.

According to the mobile communication system of the present invention, in packet transmission, data is transmitted by burst transmission. The ratio of the data non-transmission time is high. Hence, a large power consumption reducing effect can be obtained for the mobile station by stopping transmission/reception.

In the mobile communication system of the present invention, the mobile station notifies the base station of the CQI before the notification timing of the transmission/reception state update information. More specifically, when the base station notifies the mobile station of the transmission/reception state update information at a predetermined timing, the mobile station notifies the base station of the CQI before the predetermined timing. When the mobile station set in the active state transmits the CQI to the base station before the predetermined timing, packet transmission to the mobile station can be immediately started. Hence, the delay of packet transmission can be effectively decreased.

In the mobile communication system of the present invention, the base station preferentially selects a mobile station having a high channel quality and notifies the mobile station of the change to the active state. If the number of mobile stations to which the active notification can be transmitted is limited, a mobile station to which a packet can be transmitted at a high transmission rate can be preferentially set in the active state. For this reason, the packet transmission efficiency can be increased, and the delay in the mobile station can be decreased. That is, the base station preferentially sets a mobile station having a good download propagation channel in the active state by using the CQI information so that the packet transmission efficiency can be increased.

When a cyclic redundancy check (CRC) is added to the CQI information, a mobile station that normally receives the CQI information can be preferentially set in the active state. Since packet transmission can be executed in an optimum transmission mode, the packet transmission efficiency can be increased, and the delay in the mobile station can be decreased.

When the number of mobile stations to which the active notification can be transmitted is limited, a mobile station which can appropriately select the transmission mode (TFRC), i.e., a mobile station to which a packet can be transmitted at a high transmission rate can be preferentially set in the active state. For this reason, the packet transmission efficiency can be increased.

Since the mobile station which fails to receive the CQI information is not set in the active state, packet transmission in an inappropriate transmission mode can be avoided. Failing to receive the CQI information is equivalent to erroneously receiving the CQI information. In this case, the base station cannot obtain the information of the channel quality indication and decide the optimum transmission mode. The packet must be transmitted in the inappropriate transmission mode. When the mobile station which fails to receive the CQI information is not set in the active state, such situation can be prevented.

As described above, in the mobile communication system of the present invention, a mobile station having a high channel quality is preferentially set in the active state so that the delay until the start of packet transmission can be reduced. In addition, when the mobile station that fails to receive the CQI information is not set in the active state, the ratio of the time of the suspend state can be increased. Hence, the power consumption of the mobile station can also be reduced.

## Claims

1. A mobile communication system comprising:
a base station (1); and
a mobile station (2),
a radio channel being set between said base station (1) and said mobile station (2), and a packet being transmitted from said base station (1) to said mobile station (2) by using the radio channel,
**characterized in that** said base station (1) comprises
a base station transmitting/receiving section (13, 20) which sets the radio channel to said mobile station (2),
a base station state updating section (16) which generates transmission/reception state update information that indicates update of a packet receivable state in said mobile station (2) and notifies said mobile station (2) of the transmission/reception state update information, and
a base station information storage section (17) which continuously holds dedicated physical channel setting information in the radio channel in a suspend state, and
said mobile station (2) comprises
a mobile station transmitting/receiving section (23, 31) which sets the radio channel to said base station (1),
a mobile station state updating section (28) which sets, on the basis of the transmission/reception state update information, one of an active state in which the packet can be received and the suspend state in which the packet cannot be received, and
a mobile station information storage section (29) which continuously holds the dedicated physical channel setting information in the radio channel in the suspend state.

2. A system according to claim 1, wherein when said mobile station state updating section (28) receives a change instruction to the active state, said mobile station transmitting/receiving section (23, 31) starts at least one of standing by for the packet and transmission/reception of dedicated physical channel data to be transmitted by a dedicated physical channel.

3. A system according to claim 1 or 2, wherein when said mobile station state updating section (28) receives a change instruction to the suspend state, said mobile station transmitting/receiving section (23, 31) stops at least one of transmission of the dedicated physical channel data and reception of the dedicated physical channel data while continuously holding the setting information in the radio channel.

4. A system according to claim 1, 2 or 3, wherein when said base station (1) is in the suspend state, said base station transmitting/receiving section (13, 20) stops at least one of transmission of dedicated physical channel data and reception of the dedicated physical channel data while continuously holding the setting information in the radio channel.

5. A system according to claim 1, 2, 3 or 4, wherein said mobile station state updating section (28) sets the active state when the transmission/reception state update information cannot be normally received.

6. A system according to claim 1, 2, 3, 4, or 5, wherein said mobile station (2) further comprises a packet control signal generation section (27) which, when a change instruction to the active state is normally received, transmits to said base station (1) a notification reception confirmation signal of the change instruction.

7. A system according to claim 6, wherein said packet control signal generation section (27) uses an existing signal as the notification reception confirmation signal.

8. A system according to claim 7, wherein said packet control signal generation section (27) uses a channel quality indication representing a reception quality of a downlink channel as the notification reception confirmation signal.

9. A system according to claim 6, 7 or 8, wherein said base station (1) further comprises a packet transmission control section (15) which stops transmitting the packet to said mobile station (2) when no notification reception confirmation signal can be received.

10. A system according to claim 6, 7, 8 or 9, wherein said packet control signal generation section (27) notifies said base station (1) of the channel quality indication immediately before receiving the transmission/reception state update information.

11. A system according to any one of claims 1 to 10, wherein said
base station (4) further comprises a priority determination section (16a) which preferentially selects a mobile station having a high channel quality and notifies the mobile station of a change instruction to the active state.

12. A system according to any one of claims 1 to 11, wherein said
mobile station transmitting/receiving section (23, 31) starts one of transmission of a dedicated physical channel and reception of the dedicated physical channel on the basis of the setting information continuously held when said mobile station (2) changes from the suspend state to the active state.

13. A system according to any one of claims 1 to 12, wherein said
base station state updating section (16) transmits the transmission/reception state update information at a timing known in advance.

14. A mobile station which sets a radio channel to a base station (1) and receives a packet transmitted from said base station (1) by using the radio channel, **characterized by** comprising:
a mobile station transmitting/receiving section (23, 31) which sets the radio channel to the base station (1);
a mobile station state updating section (28) which sets, in accordance with transmission/reception state update information that is transmitted from the base station (1) and indicates update of a packet receivable state, one of an active state in which the packet can be received and a suspend state in which the packet cannot be received; and
a mobile station information storage section (29) which continuously holds dedicated physical channel setting information in the radio channel in the suspend state.

15. A station according to claim 14, further comprising
a mobile station user data separation section (24) which separates a reception signal from said mobile station transmitting/receiving section (23, 31) into user information and control information,
a reception quality measuring section (25) which measures a reception quality of a CPICH from said mobile station transmitting/receiving section (23, 31),
a packet reception determination section (26) which determines, on the basis of the control information from said mobile station user data separation section (24), one of presence/absence of the control information of an HS-SCCH and presence/absence of normal reception of the packet from the base station (1),
a packet control signal generation section (27) which, when a change instruction to the active state is normally received, transmits a notification reception confirmation signal of the change instruction to the base station (1), and
a signal synthesizing section (30) which synthesizes a notification reception confirmation signal and an external signal and transmits a DPCH (UL) and an HS-DPCCH.

16. A station according to claim 15, wherein said mobile station user data separation section (24) comprises
a mobile station ID determination section (24a) which detects a mobile station ID information contained in the HS-SCCH and determines whether the mobile station ID information coincides with a mobile station ID of said mobile station (2), and
a DL data determination section (24b) which determines presence/absence of transmission of the dedicated physical channel data (DL).

17. A base station which sets a radio channel to a mobile station (2) and transmits a packet to the mobile station (2) by using the radio channel, **characterized by** comprising:
a base station transmitting/receiving section (13, 20) which sets the radio channel to the mobile station (2);
a base station state updating section (16) which notifies the mobile station (2) of transmission/reception state update information that indicates update of a packet receivable state and sets the mobile station (2) in one of an active state in which the packet can be received and a suspend state in which the packet cannot be received; and
a base station information storage section (17) which continuously holds dedicated physical channel setting information in the radio channel in the suspend state.

18. A station according to claim 17, further comprising
a base station user data separation section (14) which separates a reception signal from said base station transmitting/receiving section (13, 20) into user information and control information,
a buffer (18) which stores the user information,
a packet transmission control section (15) which executes transmission control of the packet on the basis of the control information from said base station user data separation section (14) and mobile station information from said base station state updating section (16), and
a signal synthesizing section (19) which synthesizes the user information from said buffer (18) and a state update information signal from said base station state updating section (16).

19. A station according to claim 18, wherein
said packet transmission control section (15) comprises a scheduling/transmission mode deciding section (15a) which decides a scheduling/transmission mode, and
said base station user data separation section (14) comprises a UL data determination section (14a) which determines presence/absence of transmission of the dedicated physical channel data (UL).

20. A packet communication method for a mobile communication system in which a radio channel is set between a base station (1) and a mobile station (2), and a packet is transmitted from the base station (1) to the mobile station (2) by using the radio channel, **characterized by** comprising the steps of:
causing the base station (1) to notify the mobile station (2) of transmission/reception state update information that indicates update of a packet receivable state in the mobile station (2);
setting, on the basis of the transmitted transmission/reception state update information, one of an active state in which the mobile station (2) can receive the packet and a suspend state in which the mobile station (2) cannot receive the packet; and
causing the base station (1) and the mobile station (2) to continuously hold dedicated physical channel setting information in the radio channel in the suspend state.
